(19) Europäisches Patentamt
European Patent Office
Office européen des brevets

(11) **EP 2 666 590 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
***B24B 39/02*** *(2006.01)*      ***B23P 9/02*** *(2006.01)*
***B24B 49/00*** *(2012.01)*

(21) Anmeldenummer: **13167143.0**

(22) Anmeldetag: **08.05.2013**

(54) **Verfahren und Vorrichtung zum Rollieren einer zylindrischen Bauteilfläche**

Method and apparatus for rolling a cylindrical component surface

Procédé et dispositif de roulage d'une surface de composant cylindrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2012 AT 6022012**

(43) Veröffentlichungstag der Anmeldung:
**27.11.2013 Patentblatt 2013/48**

(73) Patentinhaber: **ROBERT BOSCH GMBH**
**70442 Stuttgart (DE)**

(72) Erfinder:
• **Meisl, Christian**
**5084 Grossgmain (AT)**
• **Graspeuntner, Christian**
**5400 Hallein (AT)**

(56) Entgegenhaltungen:
EP-A2- 0 041 248      DE-B3-102009 037 233
US-A1- 2009 106 961      US-B1- 6 290 573

EP 2 666 590 B1

**Beschreibung**

Die Erfindung betrifft ein Verfahren zum Rollieren einer insbesondere zylindrischen Bauteilfläche eines Werkstücks unter Verwendung eines wenigstens ein Wälzelement aufweisenden Rollierwerkzeugs, wobei das wenigstens eine Wälzelement durch hydrostatische Beaufschlagung radial nach außen gegen die Bauteilfläche gedrückt und durch Drehen des Rollierwerkzeugs oder des Werkstücks an der Bauteilfläche abrollen gelassen wird.

Die Erfindung betrifft weiters ein Rollierwerkzeug zum Rollieren einer insbesondere zylindrischen Bauteilfläche eines Werkstücks umfassend eine in das Werkstück einführbare Rollierlanze, wenigstens ein in der Rollierlanze drehbar aufgenommenes Wälzelement, das durch hydrostatische Beaufschlagung radial nach außen gegen eine Bohrungswand der Bohrung pressbar und an der Bauteilfläche abrollbar ist, und einen Drehantrieb für die Rollierlanze oder das Werkstück.

Bei Bauteilen mit großen hochdruckbeaufschlagten Flächen, wie sie beispielsweise in Hochdruckspeichern von Injektoren oder in Pumpensammlern eines Modularen Common-Rail-Systems auftreten, kommt es zum Ausfall dieser hochdruckbeaufschlagten Flächen infolge hohen Systemdrucks in erster Linie deswegen, weil es stochastisch verteilte Inhomogenitäten im Werkstoff gibt, die als Rissausgang fungieren, aber innerhalb der Werkstofftoleranzen liegen. Um die Rissbildung an diesen Stellen zu vermeiden, kann die druckbeaufschlagte Fläche mittels einer mechanischen Behandlung so umgeformt werden, dass oberflächliche Druckeigenspannungen entstehen. Bei zylindrischen Bauteilen bzw. Bauteilabschnitten kann dies beispielsweise dadurch erfolgen, dass eine oberflächliche Verdichtung des Gefüges mit Hilfe von Kugelrollieren erfolgt, wie dies beispielsweise in der DE 102009037233 B3 beschrieben ist.

Das Kugelrollieren erfolgt in der Regel so, dass das Rollierwerkzeug, bestehend aus einer Rollierlanze und mehreren, vorzugsweise mindestens drei Rollierkugeln in das zu bearbeitende zylindrische Bauteil eingeführt wird. Über eine in der Rollierlanze angebrachte Bohrung können die Rollierkugeln mit hydraulischem Druck beaufschlagt werden. Dieser hydraulische Druck presst die Rollierkugeln gegen das zylindrische Bauteil und sorgt an der Kontaktstelle für die erforderliche plastische Verformung des Bauteils. Dadurch entstehen im Bauteil oberflächliche Druckeigenspannungen, die dazu führen, dass potentielle Rissausgänge nicht zum Bruch des Bauteils unter Systemdruck (z.B. 2200 bar) führen.

Bei dieser Form der Verfestigung mittels Kugelrollieren kommt der Prozessüberwachung eine besondere Bedeutung zu. Insbesondere muss sichergestellt sein, dass die Rollierkugeln im zylindrischen Bauteil abrollen und nicht z.B. infolge von Verunreinigungen oder einer Spanbeladung im Hydraulikmedium blockieren und entlang des Bauteils gleiten. Der Stand der Technik sieht hier vor, dass vor der Bearbeitung der zylindrischen Fläche im Bauteil das Rollierwerkzeug in eine Druckmessbüchse eingeführt wird, in der die von den Rollierkugeln aufgrund des anliegenden Drucks des Hydraulikmediums ausgeübte Radialkraft gemessen wird.

Die bekannte Lösung der Prozessüberwachung stellt nicht sicher, dass während der gesamten Bearbeitung eines Bauteils die Rollierkugeln im Bauteil abrollen. Durch die Prüfung der Radialkraft in einer Druckmessbüchse kann nur nachgewiesen werden, dass die Rollierkugeln vor oder nach dem eigentlichen Rollierprozess am Bauteil abrollen. Sollte während der Rollierbearbeitung ein Span eingeklemmt werden, der bewirkt, dass eine Rollierkugel blockiert, sich dieser Span aber vor Ende der Rollierbearbeitung wieder lösen, kann die mangelhafte Bearbeitung mittels Druckmessbüchse nicht nachgewiesen werden, sodass ein potentiell sicherheitskritisches Bauteil mit zumindest teilweise mangelhafter Fertigung resultiert.

Die Aufgabe der vorliegenden Erfindung ist es daher, ein Blockieren des Wälzelements eines Rollierwerkzeugs zu erkennen. Weiters zielt die Erfindung darauf ab, nachzuweisen, dass das Wälzelement während des gesamten Rollierprozesses am Bauteil abgerollt ist und es auch nicht zeitweise zu einem Blockieren des Wälzelements gekommen ist.

Zur Lösung dieser Aufgabe sieht die Erfindung ausgehend von einem Verfahren der eingangs genannt Art im Wesentlichen vor, dass das auf Grund der Reibung zwischen dem wenigstens einen Wälzelement und der Bauteilfläche entstehende Drehmoment oder eine das Drehmoment repräsentierende Messgröße erfasst und einer Auswertung zugeführt wird. Die Erfindung beruht darauf, dass bei einem Abrollen des Wälzelements eine Rollreibung auftritt, die bei einem Blockieren des Wälzelements in Gleitreibung übergeht. Gleitreibung zeichnet sich dadurch aus, dass sie einen signifikant höheren Reibungskoeffizienten besitzt als die Rollreibung. Dadurch ergibt sich ein erhöhtes Drehmoment. Durch ständige Erfassung dieses Drehmoments oder einer das Drehmoment repräsentierenden Messgröße kann nun in einfacher Weise der Rollierprozess kontinuierlich überwacht werden.

Bevorzugt kann als die das Drehmoment repräsentierende Messgröße die Antriebsleistung des Drehantriebs des Rollierwerkzeugs bzw. Werkstücks erfasst werden. Im Fall eines elektrischen Drehantriebs kann zu diesem Zweck beispielsweise die elektrische Leistungsaufnahme des Motors erfasst werden. Insbesondere handelt es sich hierbei um den Motor zum Drehantrieb des Werkstücks, also beispielsweise der Drehmaschine, in welche das Werkstück eingespannt ist.

Alternativ kann als die das Drehmoment repräsentierende Messgröße die Torsion des Rollierwerkzeugs, insbesondere der Rollierlanze gemessen werden.

Die Auswertung des erfassten Drehmoments bzw. der korrespondierenden Messgröße kann in unterschiedlicher Weise erfolgen. Die Auswertung zielt jedenfalls bevorzugt darauf ab, einen Zustand zu erkennen, der auf das Blockieren des wenigstens einen Wälzelements schließen lässt. Bei einer Mehrzahl von Wälzelementen ist die Auswertung bevorzugt derart gestaltet, dass bereits das Blockieren eines einzigen Wälzelements erkannt wird. Das Verfahren wird in diesem Zusammenhang bevorzugt derart durchgeführt, dass die Auswertung das Generieren eines Signals in Abhängigkeit vom erfassten Drehmoment oder von der das Drehmoment repräsentierenden Messgröße umfasst, welches das Unterbrechen des Rolliervorgangs veranlasst. Alternativ kann anstelle des Unterbrechens des Rollierprozesses die hydrostatische Beaufschlagung des Wälzelements, d.h. die radiale Presskraft erhöht werden, sofern sich dadurch keine unzulässigen Spannungszustände in der Bohrungswand ergeben.

Insbesondere kann vorgesehen sein, dass die Auswertung den Vergleich des erfassten Drehmoments oder der das Drehmoment repräsentierenden Messgröße mit einem vorgegebenen Grenzwert umfasst. Das Rollieren wird dann bevorzugt bei Überschreiten des Grenzwerts unterbrochen.

Das erfasste Drehmoment bzw. die erfasste Messgröße können bevorzugt kontinuierlich aufgezeichnet und gespeichert werden, um für einen späteren Nachweis, dass das Wälzelement während des gesamten Rollierprozesses am Bauteil abgerollt ist, zur Verfügung zu stehen.

Bei der Bearbeitung von zylindrischen Bauteilflächen, insbesondere von zylindrischen Bohrungen, ist es vorteilhaft, wenn das wenigstens eine Wälzelement von einer Kugel gebildet wird.

Eine bevorzugte Verfahrensführung sieht weiters vor, dass ein Kühlschmiermittel aus einer Fertigungseinrichtung, insbesondere einer Drehmaschine abgezweigt und dem Rollierwerkzeug als Hydraulikmedium für die hydrostatische Beaufschlagung des Wälzelements zugeführt wird. Insbesondere kann es sich hierbei um diejenige Fertigungseinrichtung handeln, in die das zu bearbeitende Werkstück eingespannt wird, z.B. eine Drehmaschine, mit welcher das Werkstück rotierend angetrieben wird.

Wie bereits erwähnt, liegt eine vorteilhafte Anwendung des Verfahrens darin, dass das Werkstück ein Hochdruckspeicher oder ein Pumpensammler eines modularen Common-Rail Einspritzsystems von Brennkraftmaschinen ist.

Zur Lösung dieser Aufgabe sieht die Erfindung weiters ausgehend von einem Rollierwerkzeug der eingangs genannt Art im Wesentlichen vor, dass Erfassungsmittel zum Erfassen des auf Grund der Reibung zwischen dem wenigstens einen Wälzelement und der Bauteilfläche entstehenden Drehmoments oder einer das Drehmoment repräsentierenden Messgröße und eine Auswerteeinheit vorgesehen sind, der das von den Erfassungsmitteln erfasste Drehmoment bzw. die Messgröße zugeführt ist.

Vorteilhafte Weiterbildungen des Rollierwerkzeugs ergeben sich aus den Unteransprüchen.

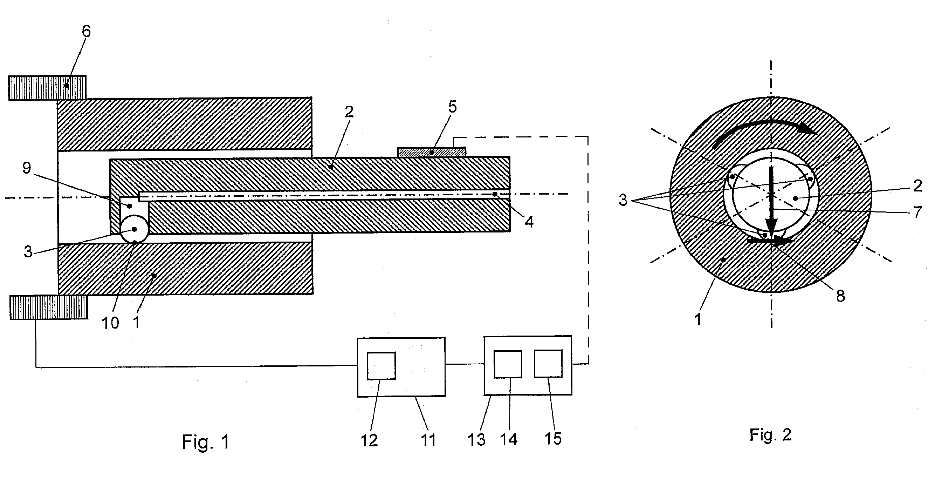

Die Erfindung wird nachfolgend anhand eines in der Zeichnung schematisch dargestellten Ausführungsbeispiels näher erläutert. In dieser zeigen Fig. 1 einen Längsschnitt des erfindungsgemäßen Rollierwerkzeugs und Fig. 2 einen Querschnitt des Rollierwerkzeugs gemäß Fig. 1.

In Fig. 1 ist das Prinzip des Kugelrollierens schematisch dargestellt. In ein zylindrisches Werkstück 1, z.B. ein Speicherrohr eines Injektors, das über die Spannbacken 6 in eine Fertigungseinrichtung, z.B. eine Drehmaschine eingespannt ist und in Rotation versetzt werden kann, wird das Rollierwerkzeug, bestehend aus einer Rollierlanze 2 und mehreren, vorzugsweise mindestens drei Rollierkugeln 3 eingeführt. Über die in der Rollierlanze 2 angebrachte Bohrung 4 können die Rollierkugeln 3 mit hydraulischem Druck, beispielsweise aus der Kühlschmiermittelversorgung der Fertigungseinrichtung, versorgt werden. Dieser hydraulische Druck presst die Rollierkugeln 3, die in Kugelführungsbohrungen 9 mit sehr geringem Spiel zu den Rollierkugeln 3 geführt sind, gegen die Wand der im zylindrischen Werkstück 1 ausgebildeten Bohrung und sorgt an der Kontaktstelle 10 für die erforderliche plastische Verformung des Werkstücks 1.

Beim vorliegenden Ausführungsbeispiel beträgt der Durchmesser einer Rollierkugel 12 mm, der Druck des Kühlschmiermittels beträgt 50 bar. Dadurch ergibt sich eine hydraulische Radialkraft (7), (Fig. 2), von

$$F_K = d_K^2 \frac{\pi}{4} p_{hyd} = (12\,mm)^2 \frac{\pi}{4} \cdot 50\,bar = 565\,N$$

Bei Annahme eines typischen Rollreibungskoeffizienten in einem Kugellager von 0,001 ergibt sich somit eine Tangentialkraft 8 von

$$F_t = c_{roll} F_K = 0,001 \cdot 565\,N = 0,5\,N$$

Daraus ergibt sich ein erforderliches Moment, um beispielsweise drei Rollierkugeln 3 im Bauteil 1 drehen zu können, unter der Annahme eines Innendurchmessers 35 mm des Werkstücks 1 zu

$$M_{roll} = nF_t d_b = 3 \cdot 0,5N \cdot 35mm = 0,053Nm$$

Blockiert nunmehr eine der Kugeln, so geht die Rollreibung an dieser Kugel in Gleitreibung über. Gleitreibung zeichnet sich dadurch aus, dass sie einen signifikant höheren Reibungskoeffizienten besitzt, beispielsweise 0,1 (Stahl auf Stahl). Dadurch ergibt sich ein erhöhtes Moment

$$M_{gleit} = c_{gleit} F_K d_B = 0,1 \cdot 565N \cdot 35mm = 2,0Nm$$

Bei einer Drehzahl von 1000/min ergibt sich damit eine zusätzliche erforderliche Leistung im Drehantrieb der Fertigungseinrichtung von

$$P = 2\pi M_{gleit} n_{MAE} = 2 \cdot \pi \cdot 2,0Nm \cdot \frac{1000/\min}{60s/\min} = 209W$$

Im Rahmen der Erfindung ist nun die erforderliche Antriebsleistung der Fertigungseinrichtung zu überwachen. Kommt es zu einem Blockieren einer Rollierkugel 3, so kann dies durch Erhöhung der Antriebsleistung erkannt werden und der Rollierprozess gestoppt werden. Zu diesem Zweck ist der schematisch mit 11 bezeichnete Drehantrieb mit einer integrierten Einheit 12 zur Erfassung der elektrischen Leistungsaufnahme des Drehantriebs 11 ausgestattet. Die Messwerte der Einheit 12 sind der Auswerteeinheit 13 zugeführt, in der die Messwerte mittels einer Vergleichsschaltung 14 mit einem vorgegebenen Grenzwert verglichen werden. Wenn der Grenzwert überschritten wird, generiert die Auswerteeinheit 13 ein Signal, das dem Drehantrieb 11 zugeführt ist und zu einem Abschalten des Drehantriebs 11 führt. Die Auswerteeinheit 13 weist weiters einen integrierten Speicher 15 auf, in der die von der Einheit 12 erhaltenen Messwerte mit einem Zeitstempel versehen und gespeichert werden. Die Auswerteeinheit 13 weist eine nicht näher dargestellte Schnittstelle auf, über welche die im Speicher 15 enthaltenen Daten ausgelesen und für nachträgliche ergänzende Auswertungen oder für Nachweiszwecke weiterverarbeitet werden können.

Alternativ kann an Stelle der Auswertung der Antriebsleistung des Drehantriebs 11 auch die an der Rollierlanze 2 auftretende Torsionsbelastung, welche proportional zum Drehmoment ist, gemessen und ausgewertet werden. Hier ist zusätzlich an der Rollierlanze 2 eine Dehnungsmessstreifenbrücke 5 montiert, mit deren Hilfe die Torsion der fest stehenden Rollierlanze 2 aufgenommen werden kann.

**Patentansprüche**

1. Verfahren zum Rollieren einer inneren zylindrischen Bauteilfläche eines Werkstücks (1) unter Verwendung eines wenigstens ein Wälzelement (3) aufweisenden Rollierwerkzeugs, wobei das wenigstens eine Wälzelement (3) durch hydrostatische Beaufschlagung radial nach außen gegen die Bauteilfläche gedrückt und durch Drehen des Rollierwerkzeugs oder des Werkstücks (1) an der Bauteilfläche abrollen gelassen wird,
**dadurch gekennzeichnet, dass** das auf Grund der Reibung zwischen dem wenigstens einen Wälzelement (3) und der Bauteilfläche entstehende Drehmoment oder eine das Drehmoment repräsentierende Messgröße erfasst und einer Auswertung zugeführt wird.

2. Verfahren nach Anspruch 1, **dadurch gekennzeichnet, dass** die Auswertung das Generieren eines Signals in Abhängigkeit vom erfassten Drehmoment oder von der das Drehmoment repräsentierenden Messgröße umfasst, welches das Unterbrechen des Rolliervorgangs veranlasst.

3. Verfahren nach Anspruch 1 oder 2, **dadurch gekennzeichnet, dass** die Auswertung den Vergleich des erfassten Drehmoments oder der das Drehmoment repräsentierenden Messgröße mit einem vorgegebenen Grenzwert umfasst.

4. Verfahren nach Anspruch 3, **dadurch gekennzeichnet, dass** das Rollieren bei Überschreiten des Grenzwerts unterbrochen wird.

5. Verfahren nach einem der Ansprüche 1 bis 4, **dadurch gekennzeichnet, dass** als die das Drehmoment repräsentierende Messgröße die Antriebsleistung des Drehantriebs (11) des Rollierwerkzeugs bzw. Werkstücks (1) gewählt wird.

6. Verfahren nach einem der Ansprüche 1 bis 4, **dadurch gekennzeichnet, dass** als die das Drehmoment repräsentierende Messgröße die Torsion des Rollierwerkzeugs gewählt wird.

7. Verfahren nach einem der Ansprüche 1 bis 6, **dadurch gekennzeichnet, dass** das wenigstens eine Wälzelement (3) von einer Kugel gebildet wird.

8. Verfahren nach einem der Ansprüche 1 bis 7, **dadurch gekennzeichnet, dass** ein Kühlschmiermittel aus einer Fertigungseinrichtung, insbesondere einer Drehmaschine, abgezweigt und dem Rollierwerkzeug als Hydraulikmedium für die hydrostatische Beaufschlagung des Wälzelements (3) zugeführt wird.

9. Verfahren nach einem der Ansprüche 1 bis 8, **dadurch gekennzeichnet, dass** das Werkstück (1) ein Hochdruckspeicher oder ein Pumpensammler eines modularen Common-Rail Einspritzsystems von Brennkraftmaschinen ist.

10. Rollierwerkzeug zum Rollieren einer inneren zylindrischen Bauteilfläche eines Werkstücks (1) umfassend eine in das Werkstück einführbare Rollierlanze (2), wenigstens ein in der Rollierlanze (2) drehbar aufgenommenes Wälzelement (3), das durch hydrostatische Beaufschlagung radial nach außen gegen die zylindrische Bauteilfläche pressbar und an der Bauteilfläche abrollbar ist, und einen Drehantrieb (11) für die Rollierlanze (2) oder das Werkstück (1), **dadurch gekennzeichnet, dass** Erfassungsmittel (12) zum Erfassen des auf Grund der Reibung zwischen dem wenigstens einen Wälzelement (3) und der Bauteilfläche entstehenden Drehmoments oder einer das Drehmoment repräsentierenden Messgröße und eine Auswerteeinheit (13) vorgesehen sind, der das von den Erfassungsmitteln (12) erfasste Drehmoment bzw. die Drehmoment repräsentierende Messgröße zugeführt ist.

11. Rollierwerkzeug nach Anspruch 10, **dadurch gekennzeichnet, dass** die Auswerteeinheit (13) zur Generierung eines vom erfassten Drehmoment oder von der das Drehmoment repräsentierenden Messgröße abhängigen Signals ausgebildet ist, wobei das Signal dem Drehantrieb (11) zugeführt ist, um den Drehantrieb (11) abzudrehen oder die Drehzahl des Drehantriebs (11) zu reduzieren.

12. Rollierwerkzeug nach Anspruch 10 oder 11, **dadurch gekennzeichnet, dass** die Auswerteeinheit (13) eine Vergleichsschaltung (14) zum Vergleichen des erfassten Drehmoments oder der das Drehmoment repräsentierenden Messgröße mit einem vorgegebenen Grenzwert umfasst, wobei die Vergleichsschaltung (14) mit dem Drehantrieb (11) zusammenwirkt, um den Drehantrieb (11) abzudrehen oder die Drehzahl des Drehantriebs (11) zu reduzieren, wenn der Grenzwert überschritten wird.

13. Rollierwerkzeug nach Anspruch 10, 11 oder 12, **dadurch gekennzeichnet, dass** die Erfassungsmittel (12) zur Ermittlung der Antriebsleistung des Drehantriebs (11) des Rollierwerkzeugs ausgebildet sind.

14. Rollierwerkzeug nach Anspruch 10, 11 oder 12, **dadurch gekennzeichnet, dass** die Erfassungsmittel (12) zur Messung der Torsion des Rollierwerkzeugs ausgebildet sind.

15. Rollierwerkzeug nach Anspruch 14, **dadurch gekennzeichnet, dass** die Erfassungsmittel (12) eine an der Rollierlanze (2) angebrachte Dehnungsmessstreifenbrücke (5) umfassen.

**Claims**

1. Method for roller burnishing an inner cylindrical component part surface of a workpiece (1) by using a roller burnishing tool comprising at least one rolling element (3), wherein the at least one rolling element (3) is pressed by hydrostatic pressurization radially outwards against the component part surface and is left to roll down the component part surface by rotating the roller burnishing tool or the workpiece (1), **characterized in that** the torque which arises as a result of the friction between the at least one rolling element (3) and the component part surface, or a measured value representing the torque, is detected and is supplied for evaluation.

2. Method according to Claim 1, **characterized in that** the evaluation comprises generating a signal in dependence on the detected torque or on the measured value representing the torque, which causes the interruption of the roller burnishing process.

3.  Method according to Claim 1 or 2, **characterized in that** the evaluation comprises comparing the detected torque or the measured value representing the torque with a predetermined boundary value.

4.  Method according to Claim 3, **characterized in that** the roller burnishing is interrupted when the boundary value is exceeded.

5.  Method according to one of Claims 1 to 4, **characterized in that** the drive power of the rotary drive (11) of the roller burnishing tool or workpiece (1) is selected as the measured value representing the torque.

6.  Method according to one of Claims 1 to 4, **characterized in that** the torsion of the roller burnishing tool is selected as the measured value which represents the torque.

7.  Method according to one of Claims 1 to 6, **characterized in that** the at least one rolling element (3) is formed by a ball.

8.  Method according to one of Claims 1 to 7, **characterized in that** a cooling lubricant is branched off from a production unit, more particularly a lathe, and is supplied to the roller burnishing tool as hydraulic medium for the hydrostatic pressurization of the rolling element (3) .

9.  Method according to one of Claims 1 to 8, **characterized in that** the workpiece (1) is a high pressure reservoir or a pump collector of a modular common rail injection system of internal combustion engines.

10. Roller burnishing tool for roller burnishing an inner cylindrical component part surface of a workpiece (1) comprising a roller burnishing lance (2) which can be inserted into the workpiece, at least one rolling element (3) which is housed rotatably in the roller burnishing lance (2) and which can be pressed by hydrostatic pressurization radially outwards against the cylindrical component part surface and can roll down on the component part surface, and a rotary drive (11) for the roller burnishing lance (2) or the workpiece (1), **characterized in that** detection means (12) for detecting the torque which arises as a result of the friction between the at least one rolling element (3) and the component part surface, or a measured value representing the torque, and an evaluation unit (13) are provided, to which the torque detected by the detection means (12), or the measured value representing the torque respectively, is supplied.

11. Roller burnishing tool according to Claim 10, **characterized in that** the evaluation unit (13) is designed for generating a signal dependent on the detected torque or on the measured value representing the torque, wherein the signal is supplied to the rotary drive (11), in order to turn off the rotary drive (11) or reduce the speed of the rotary drive (11).

12. Roller burnishing tool according to Claim 10 or 11, **characterized in that** the evaluation unit (13) comprises a comparison circuit (14) for comparing the detected torque, or the measured value representing the torque, with a predetermined boundary value, wherein the comparison circuit (14) interacts with the rotary drive (11) in order to turn down the rotary drive (11) or to reduce the speed of the rotary drive (11) when the boundary value is exceeded.

13. Roller burnishing tool according to Claim 10, 11 or 12, **characterized in that** the detecting means (12) are designed for determining the drive power of the rotary drive (11) of the roller burnishing tool.

14. Roller burnishing tool according to Claim 10, 11, or 12, **characterized in that** the detection means (12) are designed for measuring the torsion of the roller burnishing tool.

15. Roller burnishing tool according to Claim 14, **characterized in that** the detection means (12) comprise an expansion measuring strip bridge (5) which is attached to the roller burnishing lance (2) .

**Revendications**

1.  Procédé de roulage d'une surface de composant cylindrique interne d'une pièce à usiner (1) par utilisation d'un outil de roulage muni d'au moins un élément roulant (3), dans lequel l'au moins un élément roulant (3) est comprimé radialement vers l'extérieur contre la surface de composant par action d'une force hydrostatique, et est admis à se dérouler par mise en rotation de l'outil de roulage ou de la pièce à usiner (1) sur la surface de composant, **caractérisé en ce que** le couple produit en raison du frottement entre l'au moins un élément roulant (3) et la surface de composant ou une grandeur de mesure représentant le couple est détecté et est envoyé à une évaluation.

**2.** Procédé selon la revendication 1, **caractérisé en ce que** l'évaluation consiste à générer un signal en fonction du couple détecté ou de la grandeur de mesure représentant le couple, lequel signal déclenche l'interruption du processus de roulage.

**3.** Procédé selon la revendication 1 ou 2, **caractérisé en ce que** l'évaluation comprend la comparaison du couple détecté ou de la grandeur de mesure représentant le couple à une valeur limite prédéterminée.

**4.** Procédé selon la revendication 3, **caractérisé en ce que** le roulage est interrompu lorsque la valeur limite est dépassée.

**5.** Procédé selon l'une quelconque des revendications 1 à 4, **caractérisé en ce que** la puissance d'entraînement du mécanisme d'entraînement en rotation (11) de l'outil de roulage ou de la pièce à usiner (1) est sélectionnée en tant que grandeur de mesure représentant le couple.

**6.** Procédé selon l'une quelconque des revendications 1 à 4, **caractérisé en ce que** la torsion de l'outil de roulage est sélectionnée en tant que grandeur de mesure représentant le couple.

**7.** Procédé selon l'une quelconque des revendications 1 à 6, **caractérisé en ce que** l'au moins un élément de roulage (3) est constitué par une bille.

**8.** Procédé selon l'une quelconque des revendications 1 à 7, **caractérisé en ce qu'**un lubrifiant réfrigérant provenant d'une installation de production, notamment d'une machine tournante, est prélevé et envoyé à l'outil de roulage en tant que fluide hydraulique destiné à produire la force hydrostatique sur l'élément roulant (3).

**9.** Procédé selon l'une quelconque des revendications 1 à 8, **caractérisé en ce que** la pièce à usiner (1) est un accumulateur à haute pression ou un collecteur de pompe d'un système d'injection à rampe commune de moteurs à combustion interne.

**10.** Outil de roulage destiné à rouler une surface de composant cylindrique interne d'une pièce à usiner (1) comprenant une lance de roulage (2) pouvant être introduite dans la pièce à usiner, au moins un élément roulant (3) reçu tournant dans la lance de roulage (2), qui peut être comprimé radialement vers l'extérieur contre la surface de composant cylindrique par une force hydrostatique et peut être amené à être déroulé sur la surface de composant, et un mécanisme d'entraînement en rotation (11) destiné à la lance de roulage (2) ou à la pièce à usiner (1), **caractérisé en ce qu'**il est prévu des moyens de détection (12) destinés à détecter le couple produit sur la base du frottement entre l'au moins un élément roulant (3) et la surface de composant ou une grandeur de mesure représentant le couple, et une unité d'évaluation (13) à laquelle est envoyé le couple détecté par les moyens de détection (12) ou la grandeur de mesure représentant le couple.

**11.** Outil de roulage selon la revendication 10, **caractérisé en ce que** l'unité d'évaluation (13) est conçue pour produire un signal en fonction du couple détecté ou de la grandeur de mesure représentant le couple, dans lequel le signal est envoyé au mécanisme d'entraînement en rotation (11) afin d'arrêter la rotation du mécanisme d'entraînement en rotation (11) ou de réduire la vitesse de rotation du mécanisme d'entraînement en rotation (11).

**12.** Outil de roulage selon la revendication 10 ou 11, **caractérisé en ce que** l'unité d'évaluation (13) est un circuit de comparaison (14) destiné à comparer le couple détecté ou la grandeur de mesure représentant le couple à une valeur limite prédéterminée, dans lequel le circuit de comparaison (14) coopère avec le mécanisme d'entraînement en rotation (11) afin d'arrêter la rotation du mécanisme d'entraînement en rotation (11) ou de réduire la vitesse de rotation du mécanisme d'entraînement en rotation (11) lorsque la valeur limite est dépassée.

**13.** Outil de roulage selon la revendication 10, 11 ou 12, **caractérisé en ce que** les moyens de détection (12) sont conçus pour obtenir la puissance d'entraînement du mécanisme d'entraînement en rotation (11) de l'outil de roulage.

**14.** Outil de roulage selon la revendication 10, 11 ou 12, **caractérisé en ce que** les moyens de détection (12) sont conçus pour mesurer la torsion de l'outil de roulage.

**15.** Outil de roulage selon la revendication 14, **caractérisé en ce que** les moyens de détection (12) comprennent un pont à jauge de contrainte (5) monté sur la lance de roulage (2).

Fig. 1

Fig. 2

EP 2 666 590 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009037233 B3